# EUROPEAN PATENT SPECIFICATION

(11) **EP 3 812 915 B1**
(45) Date of publication and mention of the grant of the patent: **25.10.2023**
(21) Application number: 20214887.0
(22) Date of filing: 08.03.2016
(51) Int. Cl.: G06F 16/182, G06F 16/22, G06F 16/2458

(54) **BIG DATA STATISTICS AT DATA-BLOCK LEVEL**
GROSSDATENSTATISTIKEN AUF DATENBLOCKEBENE
STATISTIQUES DE MÉGADONNÉES AU NIVEAU DE BLOC DE DONNÉES

(30) Priority: 15.04.2015 US 201514687568
(43) Date of publication of application: 28.04.2021
(62) Divisional of application: 16779484.1
(73) Proprietor: Huawei Technologies Co., Ltd., Shenzhen, Guangdong 518129 (CN)
(72) Inventor: NI, Demai, Danville, CA 94506 (US); ZHANG, Guogen, San Jose, CA 95120 (US); ZHOU, Qingqing, Santa Clara, CA 95054 (US); SUN, Jason Yang, Palo Alto, CA 94303 (US)
(74) Representative: Pfenning, Meinig & Partner mbB

(56) References cited:
- US-A- 5 265 244
- US-A1- 2014 046 903
- US-A1- 2014 122 429

## Description

### FIELD OF THE INVENTION

The present disclosure relates generally to the field of database management, and more specifically, to the field of data distribution in a distributed file system.

### BACKGROUND OF THE INVENTION

Large-scale distributed file systems have rapidly gained in popularity in recent history. Distributed file systems are valued for advantages in scalability, fault tolerance, location and data access transparency when compared to non-distributed file systems. Many large-scale distributed file systems use extremely large file system block sizes (often on the order of a megabyte (MB) in magnitude) compared to disk block sizes (which are often on the order of a kilobyte (KB) in magnitude). For example, in Google File System (GFS) files are divided into fixed-size blocks of 64 MB. Hadoop distributed file system (HDFS) uses a 64MB file system block by default, with many installations employing a larger 128MB file system block size. For example, the Parquet format requires a 256MB file system block size, with a recommended size of between 512MB and 1GB. A benefit of larger file system block sizes is minimization of the computing cost of seeks. Such file system designs leverage improved transfer rates made possible by advancing hardware designs, and often provide dramatically improved performance, in terms of elapsed time, in cases where a full file/table scan is performed. Several data store solutions adapt the access method to find information based on primary keys of data stored via key-value format.

Several attempts have been made at providing online analytical processing (OLAP) for data stored via distributed file systems, including middle layer solutions such as SQL-over-Hadoop or SQL-over-Big Data, with the goal of providing reporting and data mining for distributed file system architectures. Such attempts frequently involve complex queries requiring an optimizer for both query planning and selection operations. Other attempts such as Big SQL, Stinger.next (with Hive), and Shark employ optimizers that use an external database to store pre-collected and/or pre-calculated statistical data. These approaches are quite similar to a Relational Database Management System (RDMS), such that in implementation well-known optimization logic for database queries may be used. However, while in conventional RDMS the statistical data tables and data tables storing records are managed by the same system, for a conventional distributed file system no such mechanism exists, bringing about the need to utilize another database (e.g., DB2, Hive, PostgreSQL, etc.) in order to store the statistical data table. This architecture design results in statistical data that do not co-exist on the same data node as the data represented, increasing the complexity of the network and of the communication protocol for the distributed data store. Furthermore in these systems, OLAP, which often utilizes SQL analytic functions that can be easily pre-calculated at the data block level (e.g., such as max, min, count, sum), cannot be readily used due to the separation of data records and statistical data. System maintenance is more complex for systems storing data records and statistical data separately as well.

US 5,265,244 discusses a data access structure which facilitates the processing of statistical queries concerning records stored in the structure.

US 2014/0046903 A1 discusses a data backup method for a mobile terminal, wherein the method includes scanning the backup data to generate corresponding statistics information.

US 2014/0122429 A1 discusses a data processing method for a distributed system, wherein the method comprises storing multiple replications of the data file on multiple storage nodes, wherein each replication is segmented differently, and storing respective distribution information.

### SUMMARY OF THE INVENTION

Statistical data collection on data stores often involves a full scan of tables containing the data, and may require computationally-intensive and/or high network bandwidth operations. Embodiments of the present disclosure provide a system and method to incrementally collect and aggregate statistics of data stored in a distributed file system architecture, implementing a novel statistical data block ("Stats-block") collocated with data blocks of each data node in the distributed file system. By having a configurable frequency at which statistical data are collected, the data gathering process can be tailored to reduce resource requirements of computing systems in the data network, by piggybacking on existing mechanisms of the native file system (e.g., Hadoop Archive for HDFS, Major Compaction for HBase, etc.).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The invention is defined by the features of the independent claims. Further embodiments are the subject-matter of the dependent claims.

The foregoing is a summary and thus contains, by necessity, simplifications, generalizations and omissions of detail; consequently, those skilled in the art will appreciate that the summary is illustrative only and is not intended to be in any way limiting. Other aspects, inventive features, and advantages of the present invention, as defined solely by the claims, will become apparent in the non-limiting detailed description set forth below.

### BRIEF DESCRIPTION OF THE DRAWINGS

Embodiments of the present invention will be better understood from a reading of the following detailed description, taken in conjunction with the accompanying drawing figures in which like reference characters designate like elements and in which:
Fig. 1 is a block diagram depicting an exemplary distributed file system architecture, in accordance with an embodiment of the present disclosure.
Fig. 2 is a schematic illustration depicting an exemplary Stats-block of a data node in a system utilizing a distributed file system, in accordance with an embodiment of the present disclosure.
Fig. 3 is a schematic illustration depicting several virtual block configurations for implementing a Stats-block, in accordance with an embodiment of the present disclosure.
Fig. 4 is a flowchart illustrating an exemplary process for performing a record search, in accordance with an embodiment of the present disclosure.
Fig. 5 is a block diagram illustrating an exemplary computer system, with which embodiments of the present disclosure may be implemented.

### DETAILED DESCRIPTION OF THE INVENTION

By storing statistical data in memory, close to data blocks (e.g., collocated), a system according to embodiments of the present disclosure is able to perform fast retrieval and updates of data stored in a distributed architecture, e.g., extremely large datasets stored via a distributed file system architecture. The ability to keep statistical data collocated with the data block not only substantially increases the speed of the collection process, but also expands the optimization capacity for distribution architectures such as massively parallel processing (MPP) architecture, by obviating the need of communication with a node at a higher tier (e.g., coordinator node in an MPP system; Name Node for HDFS) in order to collect statistical data. Further, statistical data and sensitive information are able to be aggregated up to the cluster level (e.g., Name Node in HDFS). The system and methods according to the present disclosure provide statistical data for extremely large datasets (so-called "Big Data") in a manner akin to that which is provided in a conventional relational database (RDMS). Furthermore, a user-defined statistical data collection mechanism can be used via a plug-in mechanism of the distributed file system, in order to handle various kinds of data as specified by the user. Such user-defined features add the facility to pre-calculate data for OLAP-like functions, as well as the flexibility of content management.

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives and modifications, which may be included within the scope of the disclosure as defined by the appended claims. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present claimed subject matter, discussions utilizing terms such as "storing," "creating," "protecting," "receiving," "encrypting," "decrypting," "destroying," or the like, refer to the action and processes of a computer system or integrated circuit, or similar electronic computing device, including an embedded system, that manipulates and transforms data represented as physical (electronic) quantities within the computer system's registers and memories into other data similarly represented as physical quantities within the computer system memories or registers or other such information storage, transmission or display devices.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present disclosure, discussions utilizing terms such as "processing" or "accessing" or "executing" or "storing" or "rendering" or the like, refer to the action and processes of a computer system, or similar electronic computing device, that manipulates and transforms data represented as physical (electronic) quantities within the computer system's registers and memories and other computer readable media into other data similarly represented as physical quantities within the computer system memories or registers or other such information storage, transmission or display devices. When a component appears in several embodiments, the use of the same reference numeral signifies that the component is the same component as illustrated in the original embodiment.

Embodiments of the present disclosure include a novel system and method for statistical data collection and storage in memory collocated with the raw data block. Herein, the term "Stats-block" is used to describe a data block (at least one data block, potentially several) of a data node that is reserved for statistical data collection, the data stored in permanent storage (e.g., hard disk, SSD and/or flash storage), and kept in memory at the node (e.g., the data node). Herein, the term "Stats-Entry" is used to describe an entry storing statistical data at the Stats-block. The entry may be in several formats, including an arrayList. Stats-Entry includes entries made at two levels: the node level and; the block level. Herein, the term "Node-Stats-Entry" is used to describe an entry regarding statistical data at the node level of a distributed file system architecture. Herein, the term "Block-Stats-Entry" is used to describe an entry regarding statistical data at the data block level of a distributed file system architecture. The Block-Stats-Entry is typically made such that a 1 -to-1 mapping to each data block of the data node containing the Stats-block is formed. The Node-Stats-Entry forms a 1-per-Stats-block mapping (that is, one Node-Stats-Entry for each data node). In some embodiments, more than one Block-Stats-Entry may be mapped to one data block. The reason to reserve more than one Block-Stats-Entry for one data block is to allow for very many entries on the data lock, such that the statistical data would not readily be accommodated by just one Block-Stats-Entry. According to various embodiments, statistical data are collected either in real-time or during major compaction processes of a distributed file system, leveraging a native plug-in framework.

An exemplary architecture design of a distributed file system according to embodiments of the present disclosure is described below. For simplicity in describing the architecture, only one Stats-block per data node is discussed in the exemplary architecture. However, it should be understood that one Stats-block per data node is an exemplary number only, and that other numbers are consistent with the scope of the present disclosure. Factors which are determinative for selecting the appropriate number of Stats-blocks for each data node include the total disk storage available on the computing system upon which the distributed file system is implemented, as well as the memory capacity of the computing system. In general, the Stats-blocks are preferably able to be completely stored in memory, and possess a pre-assigned entry for each data block in the data node, where entries stored in the data blocks represent the same data characteristics.

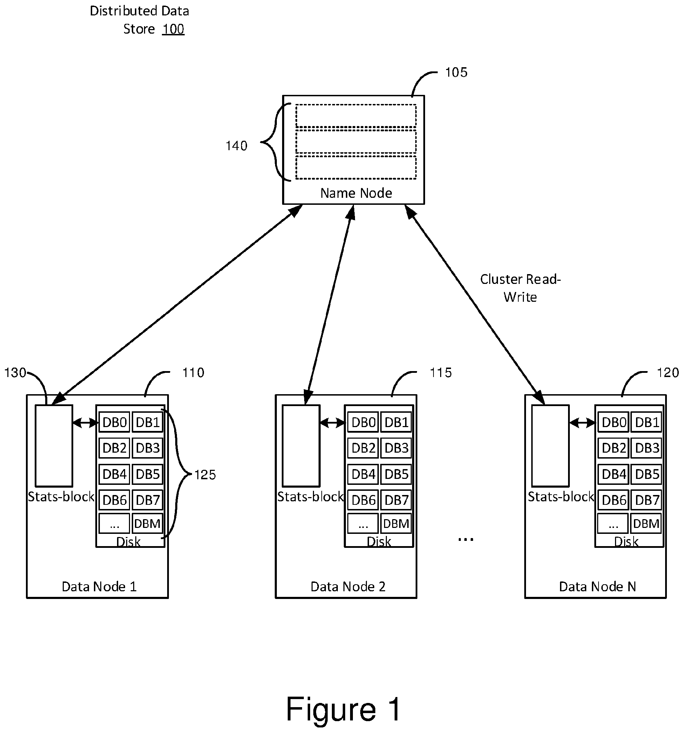

Referring now to Fig. 1, an exemplary system 100 implementing a distributed file system architecture according embodiments of the present disclosure is illustrated. Exemplary system 100 depicts a distributed file system implemented via HDFS. While system 100 is depicted as being implemented via HDFS, it will be appreciated that embodiments according to the present disclosure are not limited to HDFS, and are amenable to implementation via a number of distributed file system architectures. For convenience, terminology common to HDFS will be used to describe components and tiers of the distributed file system - e.g., "name node" to describe a top tier of the distributed file system, "data node" to describe a middle tier, and "data block" to describe a lower tier - such terminology should not be construed as limiting the architectures on which the system and methods of the present disclosure may be implemented.

The system 100 includes a name node 105, and a plurality of data nodes 110, 115, and 120. The name node 105 and data nodes 110-120 are computing systems possessing one or more processors, memory, data storage, network connection(s), and other components common to computing systems. Each data node includes a respective plurality of data blocks 125. Each data node is configured to serve up blocks of data over a network using a block protocol specific to the file system (e.g., HDFS). Communication amongst devices in the system 100 can be made via TCP/IP, or other form of network communication. Each data node also includes a Stats-block 130, which includes dedicated memory of its data node for processing read/write tasks assigned to the data node. Optionally, a Node-Stats-block 140 is implemented at the name node 105. The functionality of Stats-block 130, and the optional Node-Stats-block 140, is described in greater detail below.

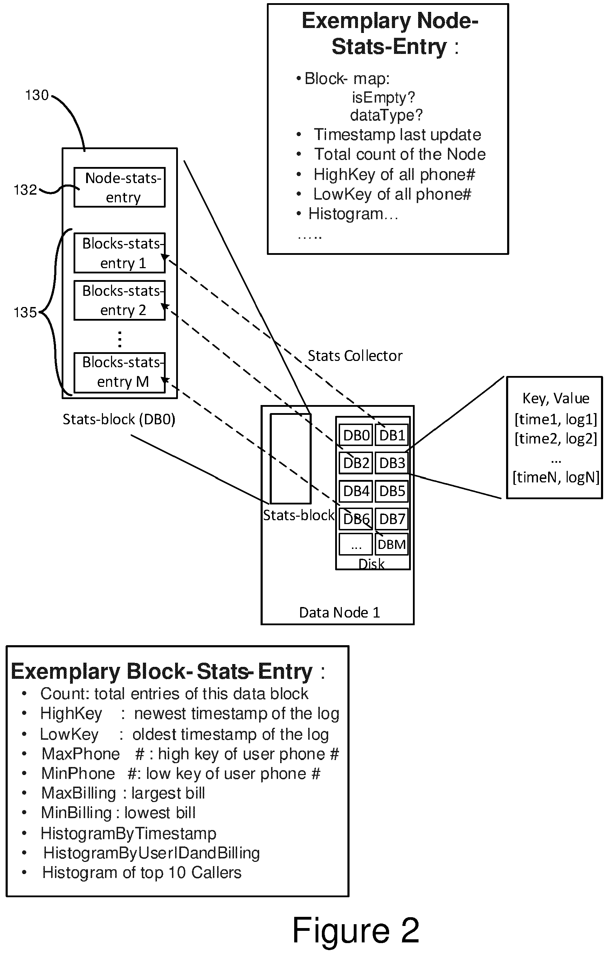

Referring now to Fig. 2, an exemplary data node of a distributed network architecture according to embodiments of the present disclosure is illustrated. The data node includes a plurality of data blocks, and a Stats-block 130. The Stats-block 130 is configured to store statistical data of data stored in the distributed network, specifically data stored at the data node implementing the particular Stats-block (e.g., data node 1 of Fig. 2). Each data node in the distributed network preferably implements a Stats-block, which stores statistical data regarding its particular data node in memory. As depicted in Fig. 2, Stats-block 130 includes a Node-stats-entry 132, and a plurality of Blocks-stats-entries 135. According to embodiments of the present disclosure, Stats-block 130 is configured to have a 1 -to-1 mapping of Blocks-stats-entries with data blocks of the data node. That is, for each data block of the data node, a respective Blocks-stats-entry will be made in the Stats-block 130. Thus, Blocks-stats-entry 1 is mapped to data block 1 (DB1), Blocks-stats-entry 2 is mapped to data block 2 (DB2), and so on. In this manner, statistical data can be kept at the data block level, aggregated at the Stats-block 130 (which itself is a data block, e.g., DB0 of the data node, reserved for statistical data collection) The Stats-block is also stored in memory, enabling fast data read. The total size of a Stat-Block is preferably constrained according to the system memory size, as the Stat-Block is configured to remain in a memory store when a system according to the present disclosure is operating under typical conditions. Periodically, the statistical data contained in memory are flushed to disk storage, in order to store the data persistently.

For example, for a data node with 2TB of disk storage and designed to have 256MB per data block, there are in total 8000 data blocks. Stats-block will occupy one block (e.g., data block 0). The Stats-block will therefore be divided into 8000 entries (for example, as an array), with entry 0 reserved for a header (e.g., Node-Stats-Entry) and entries 1-7999 for each respective data block. In this example, there will be a 32KB Block-Stats-Entry for each data block. In general, the number of data blocks for the data node is determined by the size of the storage divided by the data block size, and the size of the Stats-block is given by:

### Stats-block size = data block size / total number of data blocks

Data forming the extremely large datasets common to big data can arise from many sources, including online stores, weather forecasting, etc. To better illustrate embodiments of the present disclosure, an example including a data store of phone logs for a network carrier is depicted. In the example, data of the phone logs are stored in a key-value format, with the time of the call being the key, and the respective log information being the value associated with that key (e.g., key-value entries associated with DB3 of Fig. 2). For a phone log, exemplary statistical data collected at the data block-level can include: the count (that is, total entries of the data block); high key (most recent timestamp); low key (oldest timestamp); max phone number (high key of user phone number); min phone number (low key of user phone number); max billing (largest bill); min billing (lowest bill); histogram by timestamp; histogram by userID and billing, and histogram of top 10 callers. Statistical data collected at the node-level can include: block map utilization; block map data type; timestamp of last update; total count of the node; high key of all phone numbers; low key of all phone number, to name a few. Other collected statistical data are consistent with the scope of the present disclosure. As shown, the Stats-block 130 contains one Node-Stats-Entry and many Block-Stats-Entries (corresponding to the many data blocks of the data node).

Data in logs could be stored in a multitude of formats, including ASCII, tabular, text, etc. A "value" of the key-value pair is not limited to being a number - the value could be a string (e.g., a name), or other format. In an example of a data store including data for a phone log, the value includes: phone number, location, type of communication, duration, and person receiving.

According to embodiments of the present disclosure, each data block contains multiple data entries. Each read or write performed by the system concerns at least one data block, with most data being write-once-read-many. Node-Stats-Entry serves as the head/descriptor of the data node. Each data block is able to contain different data - one data block can have, for example, a phone billing log, while another can contain binary images. Due to this potential variety across data blocks of the data node, it is useful to have a description of the data type(s) of the data node at the Node-Stats-Entry in order to calculate statistical data for the data node.

There are several significant advantages realized by keeping Stats-block 130 collocated with data blocks of that data node. Statistics of the data (both data block-level, and node-level) are able to be updated quickly, and maintenance of the system is simplified. Likewise, merging or splitting blocks and/or regions of the distributed file system is simplified. Results of OLAP functions are able to be pre-calculated, at the data block-level, with built-in support for typical functions (e.g., average, minimum, maximum, count, etc.) and user-defined functions implemented via plug-in framework provided by the native file system (e.g., HDFS). For a system configured to process data in parallel (e.g., an MPP system), a short-circuit read of data is readily optimized for predicate push-down. By a short-circuit read, one refers to a read received at and performed by a data node, without requiring processing at a higher level (e.g., the name node, or coordinator node of MPP), or at the same level (that is, other data nodes). Therefore, as a system according to embodiments of the present disclosure contain statistical data related to all data blocks of the data node in memory, the system requires no querying of other data nodes to access information relating only to data stored at that data node.

While not depicted in Fig. 2, a Node-Stats-block (e.g., Node-Stats-block 140 of Fig. 1) can optionally be implemented at the top tier (e.g., cluster, or name node level). The Node-Stats-block contains a Node-Stats-Entry for each Stats-block of the cluster (that is, for each data node). The data are aggregated from Block-Stats-Entries, and form metadata of Stats-blocks of the system.

### STATISTICAL DATA COLLECTION, MAINTENANCE, AND FAILOVER

Many big data implementations are designed to support very large files, and commonly a staging mechanism is utilized. Application writes are redirected to either a temporary local file or to memory. Once the accumulated data grows to be greater than one block in size, a request is sent to the cluster level node (e.g., name node) or directly at the data node level, which identifies a destination data block for data to be flushed to the disk. When a file is closed, the remaining un-flushed data is transferred to the disk, and the file is put into persistent store. Some data stores implement a more sophisticated method in order to support RDMS-like data manipulation commands (e.g., INSERT/UPDATE/DELETE), via log-structured merge-trees and tombstone markers that can be used to generate smaller files. Then a compaction procedure is periodically utilized to merge the smaller files into larger blocks. Instead of updating existing file blocks, a new block is allocated to replace the existing one. In contrast to those approaches, embodiments according to the present disclosure provide three levels of consistency for statistical data collection and maintenance: strict, casual, and eventual.

For "strict" statistical data collection, changes to the data and statistical data are atomic and commit together, in real-time. This is the highest form of consistency and costs the most in terms of system resources. For casual statistical data collection, Block-Stats-Entry will be written when the data block to which the Block-Stats-Entry is mapped is flushed to disk, or the file is closed. For eventual statistical data collection, Block-Stats-Entries will be updated with a given (user-defined) period, or update is triggered by a compaction process.

When the system is configured for a "casual" or an "eventual" consistency level, the data correctness cannot be guaranteed by examination of the Stats-block alone. To guarantee retrieval of accurate data, a temporary file or memory store is required for storing up-to-the minute data. To achieve a strict level of consistency, one (or more) extra Block-Stats-Entries are preferably pre-allocated and dedicated to the data that is not yet in persistent store, and the statistical data need to be refreshed for every transaction.

Statistical data collection can be effected using one or more existing statistical data collector module (e.g., MySQL, Hive). The module is configured to point to a data block (e.g., Stats-block 130) and to store results on a data node (as compared to on a separate statistical data table, as is done conventionally).

A further aspect of embodiment of the present disclosure regards a failover mechanism. Although each Stats-block a slot on disk is also provided for persistency, and the statistical data stored in memory are flushed to disk either periodically (via user-defined configuration) or by triggering events, such as user action, compaction, or system shutdown. During a normal shutdown, the Stats-block will be written to disk with the most recent statistical data.

In the case of unplanned failure, the information in the data block (Stats-block, that is) can be brought directly over to a new Stats-block on a new data node. The failover process moves each data block to another live data node, and the Stats-block in the new data node will be updated accordingly, as if new blocks are being added in during normal operation. System failover can be implemented in at least two ways: straightforward, and optimized. In a straightforward failover, the system is configured to have a transparent failover through generation of a new data block process (e.g., the Stats-block of the failing data node is copied to a new data block at the target data node). In an optimized failover, the Stats-block of the failing data node is reused via a replica of the statistical data, stored at another node, in order to restore the system to its original state.

### VIRTUAL BLOCK

One of the advantages provided by embodiments of the present disclosure is the ability to keep all the statistical data in-memory (e.g., at the Stats-block), with each Block-Stats-Entry mapped to a data block being sufficiently large (e.g., 10~1 00KB) to store a variety of information related to the data block. This memory requirement for each Block-Stats-Entry poses a challenge, in the sense that storing all Stats-Entries for a Stats-block in memory may begin to exceed the hardware capacity of a system implementing the data node, as the amount of data in the data node (and at data blocks) increases. An aspect of the present disclosure addresses this issue via a construct termed the "Virtual Block," which is a logical group containing several data blocks of a data node. The Virtual Block acts as a middle layer for the scenario where too many data blocks exist on one data node for there to be a 1 -to-1 mapping of Stats-Entries to data blocks. Rather than each Block-Stats-Entry of the Stats-block being mapped to a respective data block (as shown in Fig. 2), when a Virtual Block is configured each Block-Stats-Entry is mapped to a respective Virtual Block. Each Virtual Block is configured to map to a given (configurable) number of data blocks, and stores statistical data relating to those mapped data blocks. Memory allocation is made for each Virtual Block, with the total memory allocation for the Stats-block divided amongst the number of Virtual Blocks.

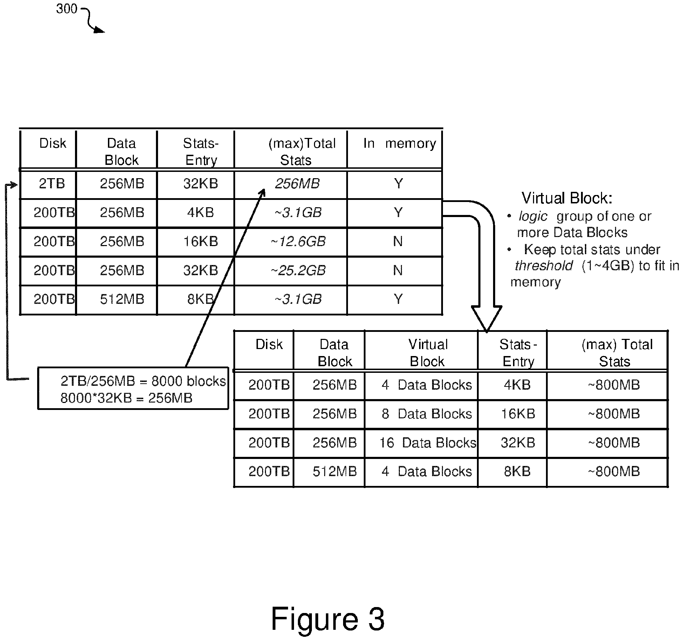

Referring now to Fig. 3, several Virtual Block configurations 300 for implementing a Stats-block are depicted. The upper table depicts several possible disk sizes, with corresponding data block size, Block-Stats-Entry size, maximum (total) size of Stats-block, and an indication of whether the Stats-block will fit in memory. Typically each data node of a distributed system will have a minimum of 32GB memory, with up to 96GB or 128GB memory in present-day systems. The ratio of the size of the memory in the data node compared to the size of the disk storage is important. If the Stats-block of the data node were to become too great, it is possible that the Stats-block implementation would not work for the system - this is the reason for which a Virtual Block is implemented.

For example, the first case shows a disk of 2TB in size, with a data block size of 256MB. The Block-Stats-Entry is therefore 32KB, with a total Stats-block size of 256MB. This size should be readily accommodated by memory presently available in computing systems. Conversely, a 200TB disk size with a 256MB data block leads to a Stats-block size of approximately 25GB, which will not readily fit into memory currently available.

For such a case the Virtual Block would be properly utilized. The number of data blocks that are mapped to a given Virtual Block is configurable, and can be recommended based on the particular hardware present in the system. The number of data blocks refers to the number of data blocks for which a given Stats-block-Entry is responsible for keeping the statistical data. The number of data blocks mapped to the generated Virtual Block is determined to ensure that the Stats-block does not become too large (e.g., too large to fit into memory). That is, the granularity of the Stats-block is able to be configured. If no Virtual Block is configured, granularity is 1-to-1, that is, statistical data from one data block corresponds to one Stats-block-Entry. If a Virtual Block is necessary to reduce memory footprint, granularity will be greater, such that statistical data of more than data block are stored in one Stats-block-Entry (e.g., 4-to-1 , 8-to-1, 16-to-1 , etc.). Changing the granularity with which the Stats-block is implemented is able to constrain memory usage, in order to guarantee that only one Stats-block is needed for a given data node.

The lower table depicts several possible configurations for implementing a Virtual Block for a data node having a 200TB disk size. For a data block size of 256MB and Block-Stats-Entry size of 4KB, the Virtual Block would correspond to 4 data blocks, leading to a total Stats-block memory size of approximately 800MB. For a data block size of 256MB and Block-Stats-Entry size of 16KB, the Virtual Block would correspond to 8 data blocks, again leading to a total Stats-block memory size of approximately 800MB. For a data block size of 256MB and Block-Stats-Entry size of 32KB, the Virtual Block would correspond to 16 data blocks, again leading to a total Stats-block memory size of approximately 800MB. Finally, for a data block size of 512MB and Block-Stats-Entry size of 8KB, the Virtual Block would correspond to 4 data blocks, leading to a total Stats-block memory size of approximately 800MB. As is shown, the Virtual Block can readily be configured to guarantee that the total size of the Stats-block will be accommodated by the memory of the data node.

Statistical data can be divided into two categories: those of fixed size (e.g., max, min, count, cardinality, etc.), and those of non-fixed size (e.g., histogram, pairs of distinct value and frequency). The fixed-size data are usually very small (100~500bytes), and the size is the same for all data blocks. The challenge arises from the non-fixed data, for example in a phone log, each pair of distinct phone number and frequency will be 10(digit)+4(int) = 14 bytes in an uncompressed case, and there may be thousands of distinct phone numbers in a given data block. One manner of addressing this problem is a hybrid approach wherein, for example, only the top ten pairs of phone number and frequency are kept, while the remaining pairs are kept in a histogram by range (for example, in total 11 ranges with top 10 phone numbers as a boundary). In this exemplary case, only approximately 300 bytes would be sufficient to store the statistical data. An advantage of HDFS (and many other big data implementations) with regard to data changes is that updates of stored data are not performed Therefore statistical data can be calculated once only, without the worry of overflow due to a later update. Thus, as long as the configuration of Block-Stats-Entry to data blocks (e.g., Virtual Block mapping) is pre-calculated in order to fit in each Block-Stats-Entry in memory, overflow will not occur due to input data.

### AGGREGATED FUNCTIONS AND FILTER-FACTOR ESTIMATION:

By having the Stats-block in memory (e.g., all Block-Stats-Entries and Node-Stats-Entry), many analysis searches can be answered rapidly, with a reduction to or elimination of I/O to disk. A query can be optimized at data node level, for example in order to achieve local optimization of an MPP architecture. Furthermore, with the optional aggregation of Node-Stat-Entry and other selected information to the name node level (e.g., top level), optimization can also be carried out at cluster-level.

Although Count(*) is among the most common of OLAP functions, it remains a challenge for conventional data stores in the big data environment. For example, at the present time HBase must scan all data blocks of a table in order to obtain this information. In order to gain a similar level of performance as for a RDMS, conventional approaches must use a third-party method, like a row trigger API or a coprocessor. Even these approaches have difficulty in handling certain search predicates, such as those including timestamp ranges.

Embodiments according to the present disclosure provide a fast and robust solution for common OLAP functions. In-memory lookups at all Node-Stats-Entries are sufficient to provide many values for common OLAP functions. Additionally, the optional aggregated Node-Stats-Entries at Cluster-level (e.g., at Node-Stats-block 140 of name node 105) enable requests results via only one in-memory lookup, at the name node level. For the case of a range search of a key (e.g., search of peak time for phone calls in a day), each data node can perform one in-memory lookup at its respective Stats-block, with at most two I/O reads of the boundary data blocks. This represents a significant improvement compared to conventional approaches, which must read all data blocks of the data node. Further, this lookup read is able to be triggered via MPP, for example.

Searching of non-key values can be made more efficient in several ways. For example, the maximum, minimum, and count of non-key values can be aggregated at the name node. This aggregation can be done via a default process, where a MapReduce job is processed at each data node in order to retrieve the Node-Stats-Entry from that data nodes Stats-block, and the results are aggregated to the name node during execution time. Alternatively, an optimized process can include a copy of each Node-Stats-Entry (for each data node) being stored at cluster level, the copy storing may be at the name node, or at some other high-level system. Aggregation is able to be performed without a data read on data blocks of the data nodes. In the case of a system utilizing an MPP architecture, an MPP data node is able to retrieve its Node-Stats-Entry locally and to then aggregate the information up to the MPP coordinator.

Selectivity (e.g., filter factor) estimation is one of the key statistical data for query optimization, which directly impacts determination of JOIN sequence and workload balance in a distributed data store. A common approach to is to calculate and store this information in another (e.g., separate) database. However, this information easily becomes out-of-date with input of data in the distributed data store, and further cannot be leveraged at the data node level.

Embodiments of the present disclosure enable generation of accurate selectivity estimation, on-the-fly, without resource-intensive I/O operations, and without the need to store filter-factor on a third party database (as may be necessary in other approaches). All calculations rely on the existing in-memory statistical data (e.g., cardinality, histogram, maximum, minimum, count, etc.). The pseudo code below shows the computation process for an exemplary phone log data store, which is applicable for three levels - data block, data node, and cluster:

```
 /* @ Data-Block Level */
 int numberOfTransactionsAtBlock;
 if phoneNumber <= Block-Stats-Entry.max(phoneNumber) &&
    phoneNumber >= Block-Stats-Entry.min(phoneNumber) {
    if Block-Stats-Entry.isAmongTop10Number(phoneNumber) {
        numberOfTransactionsAtBlock =
         histoGramsOfTop10(phoneNumber); // exact value
 } else {
        numberOfTransactionsAtBlock =
         CardinalityofPhoneNumber * (Block-Stats-Entry.count - totalofTop10)/
         (CardinalityofPhoneNumber - 10); // estimated value
 }
 } else numberOfTransactionsAtBlock = 0;
 Selectivity AtBlock = numberOfTransactionsAtBlock/CardinalityofPhoneNumber;
 
 /* @ Data-Node level */
 if phoneNumber <= Block-Stats-Entry.max(phoneNumber) &&
    phoneNumber >= Block-Stats-Entry.min(phoneNumber) {
    invoke Data-Block Level logic above;
    SelectivityAtDataNode = sum(numberOfTransactionsAtBlock)/KVCount;
 } else SelectivityAtDataNode = 0;
 
 /* @ Cluster level */
 SelectivityAtCluster = sum(numberOfTransactionsAtDataNode)/KVCount;
```

The above logic, when utilized on a system according to the present disclosure, involves no I/O to the data block level. This is due to the fact that all the statistical data are stored in a Stats-block, the statistical data being either exactly accurate (when a strict consistency policy is used), or closely estimating (when a casual or an eventual consistency policy is used) the data presently stored at the data nodes of the distributed data store.

### ENHANCED POINT SEARCH METHOD FOR COLUMN-STORE

In-memory statistics of data stored at the data block and data node levels enables enhanced search capability for extremely large datasets distributed over a data store. For example, with both maximum and minimum keys saved in both a Node-Stats-Entry and Block-Stats-Entries, a point search method can be applied to the predicate of a client request, on both keys and values. In an exemplary embodiment, a search will first sort by Block.min, and then sort by Block.max, discarding the data blocks with Block.max < searchValue or Block.min > searchValue. Only the remaining, qualified data blocks are scanned to match against the search value.

Exemplary pseudo code for performing a point search of a phone log of a distributed data store includes:

```
 BlockMinMaxEntry[Blockld, Min, Max] //
```

```
 example: [blockID = 12, minPhone# = 4084932723, maxPhone# =
 4089980123]
 ArrayList<BlockMinMaxEntry> BlockStats;
 ArrayList<BlockMinMaxEntry> BlockStatsOrderbyMin = BlockStats.sort(min);
 ArrayList<BlockMinMaxEntry> BlockStatsOrderbyMax = BlockStats.sort(max);
 function Lookup(int value) {
    TargetBlocks =
      BlockStatsOrderbyMin.excludeMinLargerThan(value)
         union
      BlockStatsOrderbyMax.excludeMaxSmallerThan(value);
   Scan(TargetBlocks, value);
 }
```

It should be noted that the ArrayList data (e.g., data stored at Block-Stats) are already in-memory, so that sorting can be performed quickly. Thus, qualifying data nodes (those data nodes having data meeting the request criteria) are determined quickly, via in-memory processing, and only the qualified data nodes require data blocks to be scanned to find the requested data. According to an embodiment of the present disclosure, statistical data is pre-sorted and the results stored in Node-Stats-Entry if a particular value and point search is common. A common point search may be user-defined, or alternatively, automatically determined by a system according to, for example, a threshold frequency with which the point search is performed.

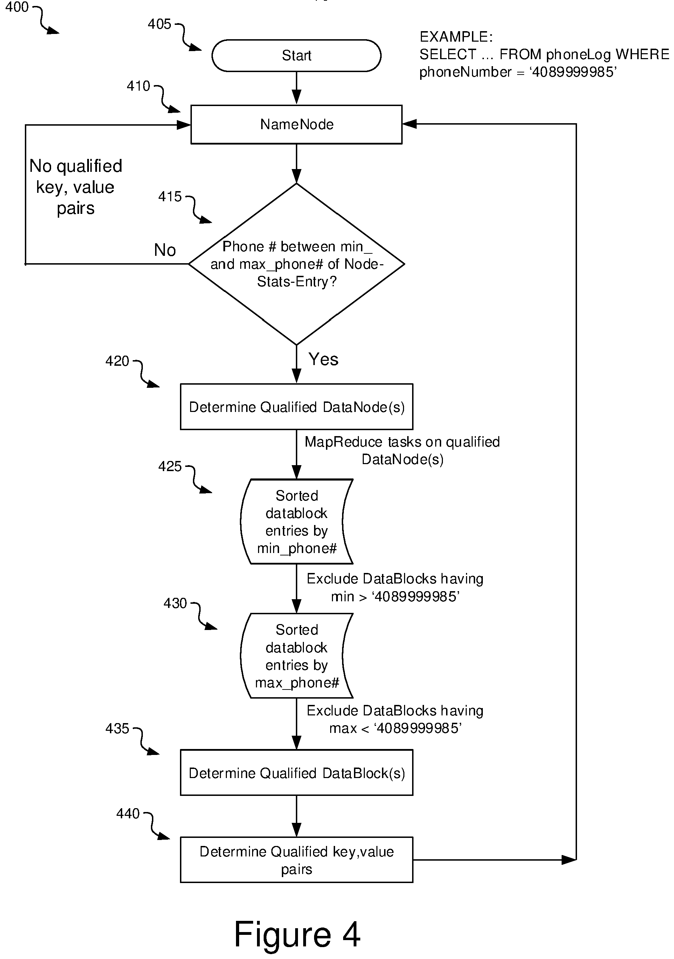

Referring now to Fig. 4, a flowchart 400 of a process of a point search for a column stored value (e.g., key-value) in a data store is depicted, according to an embodiment of the present disclosure. Steps 405-440 describe exemplary steps comprising the process depicted in flowchart 400 in accordance with the various embodiments herein described. In one embodiment, the flowchart 400 is implemented as computer-executable instructions stored in a computer-readable medium and performed by one or more computing devices executing a process for performing a point search for a column stored value in a distributed data store.

The process starts at step 405, with an exemplary search (e.g., client request) of a phone record: SELECT * FROM phoneLog WHERE phonenumber = '4089999985.' The process forwards the request to the name node of the distributed store at step 410. At step 415 the name node searches the statistical data stored at the Node-Stats-Entry level to determine if the requested phone number '4089999985' is between the minimum and the maximum of the stored values. The Node-Stats-Entries are an aggregate of all data nodes of the data store, and therefore if the phone number is not found to be between the minimum and maximum of the phone numbers recorded at the Node-Stats-Entry level, the phone number is not present in any data node of the distributed data store. Therefore, if at step 415 the result is NO, the result returned to the name node is that no qualified key-value pairs are present for the request. If at step 415 the name node determines YES, the phone number is between the minimum and maximum via the Node-Stats-Entry, the process continues to step 420.

At step 420 a search is performed for the data nodes of the distributed store that qualify for the phone number being queried. A search is only performed for the requested data on data stored by qualified data nodes. Qualified data nodes can be determined by the Node-Stats-Entry, which can include common information such as the maximum and minimum values of keys stored in the data node. According to an embodiment, MapReduce tasks are performed on qualified data nodes to sort the data stored by each data node.

At step 425 a search is made (e.g., via a search algorithm) for the phone number satisfying the request criteria. The search may be made against the statistical data stored in Stats-block of each qualifying data node, which contains statistical data on each data block of the data node. In the example search, if the minimum of a data block is greater than number searched, the data block cannot qualify and is excluded. Thus, non-qualifying data blocks can be excluded, for each qualifying data node (determined at step 420).

At step 430, the search is continued to be made for the phone number against the statistical data stored in Stats-block of each qualifying data node. At step 430 the maximum of a data block is searched, and if the maximum of the data block is less than the number searched, the data block cannot qualify and is excluded. Thus, further non-qualifying data blocks can be excluded, for each qualifying data node (determined at step 420).

At step 435 the results of step 425 and 430 are used to determine the qualified data blocks of the distributed data store, which may be on more than one data node in the network.

At step 440 an iterative loop is performed over values stored in the qualified data blocks determined at step 435. In contrast to steps 405-434, which can be performed via in-memory processing only (e.g., by analyzing data stored at respective Stats-blocks of data nodes of the system), step 440 involves input/output scans of data blocks, at the disk level. Thus, a majority of the filtering for a request is done via in-memory processing only, and can be performed against key and non-key values. Further, querying can be done at all levels (top, middle, lower - e.g., name node, data node, data block).

### EXEMPLARY COMPUTING SYSTEM

According to an embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be database servers, storage devices, desktop computer systems, portable computer systems, handheld devices, networking devices or any other device that incorporates hard-wired and/or program logic to implement the techniques.

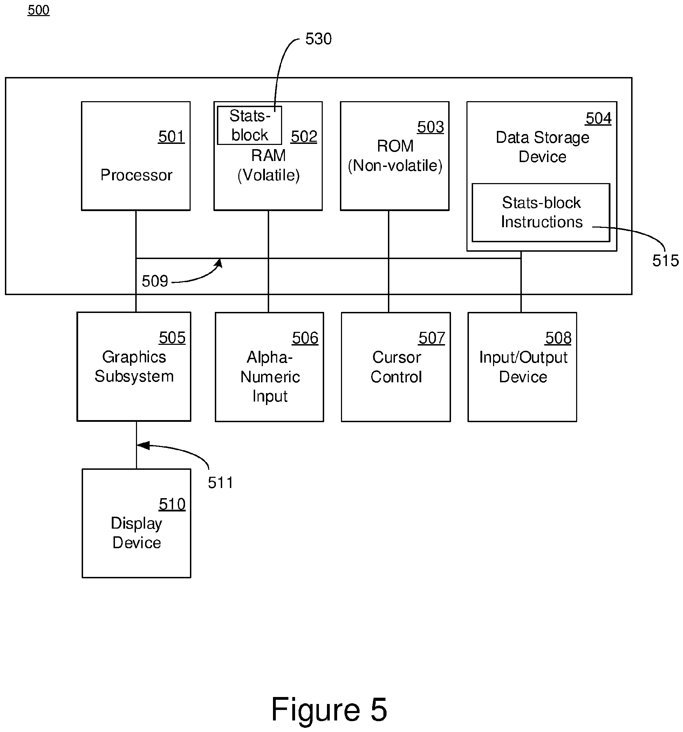

Figure 5 illustrates an exemplary configuration of an apparatus 500 in accordance with various embodiments of the present disclosure. The exemplary system 500 upon which embodiments of the present invention may be implemented includes a general purpose computing system environment. In its most basic configuration, computing system 500 typically includes at least one processing unit 501 and memory, and an address/data bus 509 (or other interface) for communicating information. Depending on the exact configuration and type of computing system environment, memory may be volatile (such as RAM 502), non-volatile (such as ROM 503, flash memory, etc.) or some combination of the two.

Computer system 500 may also comprise an optional graphics subsystem 505 for presenting information to the computer user, e.g., by displaying information on an attached display device 510, connected by a video cable 511. According to embodiments of the present disclosure, the graphics subsystem 505 may be coupled directly to the display device 510 through the video cable 511. In alternate embodiments, display device 510 may be integrated into the computing system (e.g., a laptop or netbook display panel) and will not require a video cable 511.

Additionally, computing system 500 may also have additional features/functionality. For example, computing system 500 may also include additional storage media (removable and/or non-removable) including, but not limited to, magnetic or optical disks or tape. Such additional storage is illustrated in Figure 5 by data storage device 504. Computer storage media includes volatile and nonvolatile, removable and non-removable media implemented in any method or technology for storage of information such as computer readable instructions, data structures, program modules or other data. RAM 502, ROM 503, and data storage device 504 are all examples of computer storage media. RAM 502 may include a Stats-block 530 as described herein, and data storage device 504 may include Stats-block instructions 515, which comprise software that is executable by a processor (e.g. 501) to impart the computing system 500 with some or all of the functionality described herein.

Computer system 500 also comprises an optional alphanumeric input device 506, an optional cursor control or directing device 507, and one or more signal communication interfaces (input/output devices, e.g., a network interface card, and/or a transmitter and receiver, also called a "transceiver") 508. Optional alphanumeric input device 506 can communicate information and command selections to central processor 501. Optional cursor control or directing device 507 is coupled to bus 509 for communicating user input information and command selections to central processor 501. Signal communication interface (input/output device) 508, also coupled to bus 509, can be a serial port. Communication interface 508 may also include wireless communication mechanisms. Using communication interface 508, computer system 500 can be communicatively coupled to other computer systems over a communication network such as the Internet, a software defined network (SDN), or an intranet (e.g., a local area network), or can receive data (e.g., a digital television signal).

In the foregoing detailed description of embodiments of the present disclosure, numerous specific details have been set forth in order to provide a thorough understanding of the present disclosure. However, it will be recognized by one of ordinary skill in the art that the present disclosure is able to be practiced without these specific details. In other instances, well-known methods, procedures, components, and circuits have not been described in detail so as not to unnecessarily obscure aspects of the embodiments of the present invention. Although a method is able to be depicted as a sequence of numbered steps for clarity, the numbering does not necessarily dictate the order of the steps. It should be understood that some of the steps may be skipped, performed in parallel, or performed without the requirement of maintaining a strict order of sequence. The drawings showing embodiments of the invention are semi-diagrammatic and not to scale and, particularly, some of the dimensions are for the clarity of presentation and are shown exaggerated in the drawing Figures. Similarly, although the views in the drawings for the ease of description generally show similar orientations, this depiction in the Figures is arbitrary for the most part.

Embodiments according to the present disclosure are thus described. While the present disclosure has been described in particular embodiments, it is intended that the invention shall be limited only to the extent required by the appended claims and the rules and principles of applicable law.

## Claims

1. A method of searching for data in a distributed file system, the method comprising:
Receiving (Step 405) a data request at a name node (105) of the distributed file system, the distributed file system comprising a plurality of data nodes (110, 115, 120) with a storage disk each having a plurality of data blocks (125), each data node storing statistical data of records stored in the respective plurality of data blocks, the statistical data stored in a statistical data block in a memory of the data node, wherein the statistical data block of the data node comprises statistical data (132) of the data node and, for each of the data blocks comprised by the data node, statistical data (135) of the respective data block (125);
determining (Step 420) qualified data nodes based on the statistical data of each data node and, afterwards, determining (Step 435) qualified data blocks of the plurality of data blocks (125) comprised by the determined qualified data nodes, wherein the qualified data blocks satisfy the request, based on comparing the statistical data of records with a criteria of the data request; and
determining (440) qualified records of the qualified data blocks, based on the data request;
wherein qualified data nodes are determined based, at least in part of results of online analytical processing which are pre-calculated for each data block.

2. The method of claim 1, wherein the online analytical functions comprise built-in support for typical functions such as average, minimum, maximum or count, and for user-defined functions implemented via plug-in framework provided by a native file system.

3. A computer program product, comprising instructions when performed by one or more processors cause the one or more processors to implement a method according claim 1 or 2.

4. A computer, comprsing a memory storing computer program and one or more processors performing the computer program to cause the computer to implement a method according to claim 1 or 2.

## Patentansprüche

1. Verfahren zum Suchen nach Daten in einem verteilten Dateisystem, wobei das Verfahren Folgendes umfasst:
Empfangen (Schritt 405) einer Datenanforderung in einem Namenknoten (105) des verteilten Dateisystems, wobei das verteilte Dateisystem mehrere Datenknoten (110, 115, 120) mit einem Speicherungsdatenträger jeweils mit mehreren Datenblöcken (125) umfasst, jeder Datenknoten statistische Daten von in den jeweiligen mehreren Datenblöcken gespeicherten Aufzeichnungen speichert und die statistischen Daten in einem statistischen Datenblock in einem Speicher des Datenknotens gespeichert werden, wobei der statistische Datenblock des Datenknotens statistische Daten (132) des Datenknotens und für jeden der durch den Datenknoten enthaltenen Datenblöcke statistische Daten (135) des jeweiligen Datenblocks (125) umfasst;
Bestimmen (Schritt 420) von qualifizierten Datenknoten auf der Basis der statistischen Daten jedes Datenknotens und danach Bestimmen (Schritt 435) von qualifizierten Datenblöcken der mehreren Datenblöcke (125), die durch die bestimmten qualifizierten Datenknoten enthalten werden, wobei die qualifizierten Datenblöcke die Anforderung erfüllen, auf der Basis eines Vergleichs der statistischen Daten von Aufzeichnungen mit einem Kriterium der Datenanforderung; und
Bestimmen (440) von qualifizierten Aufzeichnungen der qualifizierten Datenblöcke auf der Basis der Datenanforderung;
wobei qualifizierte Datenknoten mindestens teilweise auf der Basis von Ergebnissen einer analytischen Online-Verarbeitung bestimmt werden, die für jeden Datenblock im Voraus berechnet werden.

2. Verfahren nach Anspruch 1, wobei die analytischen Online-Funktionen eingebaute Unterstützung für typische Funktionen, wie etwa Mittelwert, Minimum, Maximum oder Zählwert, und für benutzerdefinierte Funktionen, die über einen durch ein natives Dateisystem bereitgestellten Plugin-Rahmen implementiert werden, umfassen.

3. Computerprogrammprodukt, das Anweisungen umfasst, die, wenn sie durch einen oder mehrere Prozessoren ausgeführt werden, bewirken, dass der eine oder die mehreren Prozessoren ein Verfahren nach Anspruch 1 oder 2 implementieren.

4. Computer mit einem Speicher, der ein Computerprogramm speichert, und einem oder mehreren Prozessoren, die das Computerprogramm ausführen, um zu bewirken, dass der Computer ein Verfahren nach Anspruch 1 oder 2 implementiert.

## Revendications

1. Procédé de recherche de données dans un système de fichiers distribué, le procédé comprenant :
la réception (étape 405) d'une demande de données au niveau d'un noeud de nom (105) du système de fichiers distribué, le système de fichiers distribué comprenant une pluralité de noeuds de données (110, 115, 120) comportant un disque de stockage ayant chacun une pluralité de blocs de données (125), chaque noeud de données stockant des données statistiques d'enregistrements stockés dans la pluralité respective de blocs de données, les données statistiques étant stockées dans un bloc de données statistiques dans une mémoire du noeud de données, le bloc de données statistiques du noeud de données comprenant des données statistiques (132) du noeud de données et, pour chacun des blocs de données compris par le noeud de données, des données statistiques (135) du bloc de données respectif (125) ;
la détermination (étape 420) de noeuds de données qualifiés à partir des données statistiques de chaque noeud et, ensuite, la détermination (étape 435) de blocs de données qualifiés de la pluralité de blocs de données (125) constitués par les noeuds de données qualifiés déterminés, les blocs de données qualifiés satisfaisant à la demande, sur la base de la comparaison des données statistiques d'enregistrements à un critère de la demande de données ; et
la détermination (440) d'enregistrements qualifiés des blocs de données qualifiés, sur la base de la demande de données ;
des noeuds de données qualifiés étant déterminés sur la base, au moins en partie de résultats de traitement analytique en ligne qui sont pré-calculés pour chaque bloc de données.

2. Procédé selon la revendication 1, dans lequel les fonctions analytiques en ligne comprennent un support intégré pour des fonctions typiques telles que la moyenne, le minimum, le maximum ou le comptage, et pour des fonctions définies par un utilisateur mises en oeuvre par le biais d'un cadre d'extension fourni par un système de fichiers natif.

3. Produit de programme informatique, comprenant des instructions qui, lorsqu'elles sont exécutées par un ou plusieurs processeurs, amènent le ou les processeurs à mettre en oeuvre un procédé selon la revendication 1 ou 2.

4. Ordinateur, comprenant une mémoire stockant un programme informatique et un ou plusieurs processeurs exécutant le programme informatique pour amener l'ordinateur à mettre en oeuvre un procédé selon la revendication 1 ou 2.
